# EUROPEAN PATENT SPECIFICATION

(11) **EP 4 559 862 B1**
(45) Date of publication and mention of the grant of the patent: **02.12.2026**
(21) Application number: 25155540.5
(22) Date of filing: 31.12.2012
(51) Int. Cl.: B66F 9/075, G05D 1/00, B66F 9/06, B62B 3/06, B62B 5/00

(54) **AUTO-NAVIGATING VEHICLE WITH FIELD-OF-VIEW ENHANCING SENSOR POSITIONING AND METHOD OF ACCOMPLISHING SAME**
SELBSTNAVIGIERENDES FAHRZEUG MIT SICHTFELDVERBESSERNDER SENSORPOSITIONIERUNG UND VERFAHREN ZU DESSEN ERHALT
VÉHICULE À NAVIGATION AUTOMATIQUE AVEC POSITIONNEMENT DE CAPTEUR AMÉLIORANT LE CHAMP DE VISION ET SON PROCÉDÉ D'EXÉCUTION

(30) Priority: 30.12.2011 US 201161581863 P
(43) Date of publication of application: 28.05.2025
(62) Document number(s) of the earlier application(s) in accordance with Art. 76 EPC: 12821358.4 / 2 797 832
(73) Proprietor: Seegrid Corporation, Pittsburgh, PA 15275 (US)
(72) Inventor: WEISS, Mitchell, Carlisle, 01741 (US)
(74) Representative: Müller-Boré & Partner Patentanwälte PartG mbB

(56) References cited:
- GB-A- 2 383 310
- US-A1- 2004 073 359
- US-A1- 2006 104 800

## Description

### FIELD OF INTEREST

The present inventive concepts relate to the field of robotic, self-navigating, and auto-navigating vehicles, and more particularly to such vehicles with available hands-on operator control.

### BACKGROUND

Robots, generally, can be used in a wide variety of contexts, industrial, military, and personal. Some robots have no capacity or intention for hands-on operator interaction to perform their tasks, e.g., robotic vacuum cleaners and unmanned aerial vehicles. Other robots do, however, require or accommodate direct (non-remote) user interaction during operation.

Robotic, self-navigating, and auto-navigating vehicles (collectively "auto-navigating vehicles") are vehicles that move autonomously from place to place. While some auto-navigating vehicles do not anticipate or accommodate hands-on operation by a human operator, some auto-navigating vehicles do anticipate, or at lest accommodate, human operators being aboard for the performance of certain tasks. For example, auto-navigating pallet trucks and tuggers can have robotic navigation ability, where a human operator can ride along to perform tasks once the auto-navigating vehicle arrives at its destination.

A warehouse, which is primarily used for the storage of goods for commercial purposes, is a facility having increased utility for robots and auto-navigating vehicles. The storage provided by a warehouse is generally intended to be temporary, as such goods ultimately may be intended for a retailer, consumer or customer, distributor, transporter or other subsequent receiver. A warehouse can be a standalone facility, or can be part of a multi-use facility. Thousands of types of items can be stored in a typical warehouse. The items can be small or large, individual or bulk. It is common to load items on a pallet for transportation, and the warehouse may use pallets as a manner of internally transporting and storing items.

A well-run warehouse is well-organized and maintains an accurate inventory of goods. Goods can come and go frequently, throughout the day, in a warehouse. In fact, some large and very busy warehouses work three shifts, continually moving goods throughout the warehouse as they are received or needed to fulfill orders. Shipping and receiving areas, which may be the same area, are the location(s) in the warehouse where large trucks pick-up and drop-off goods. The warehouse can also include a staging area - as an intermediate area between shipping and receiving and storage aisles and areas within the warehouse where the goods are stored. The staging area, for example, can be used for confirming that all items on the shipping manifest were received in acceptable condition. It can also be used to assemble or otherwise prepares orders for shipping.

Goods in a warehouse tend to be moved in one of two ways, either by pallet or by cart (or trailer). A pallet requires a pallet transport for movement, such as a pallet jack, pallet truck, forklift, or stacker. A stacker is a piece of equipment that is similar to a fork lift, but can raise the pallet to significantly greater heights, e.g., for loading a pallet on a warehouse shelf. A cart requires a tugger (or "tow cart"), which pulls the cart from place to place.

A pallet transport can be manual or motorized. A traditional pallet jack is a manually operated piece of equipment, as is a traditional stacker. When a pallet transport is motorized, it can take the form of a powered pallet jack, pallet truck, or forklift (or lift truck). A motorized stacker is referred to as a power stacker. A motorized pallet jack is referred to as a powered pallet jack, which an operator cannot ride, but walks beside. A pallet truck is similar to a powered pallet jack, but includes a place for an operator to stand.

As with motorized pallet transports, a tugger can be in the form of a drivable vehicle or in the form of a powered vehicle along the side of which the operator walks. In either form, a tugger includes a hitch that engages with a companion part on the cart, such as a sturdy and rigid ring or loop.

Pallet transports, tuggers, and other vehicles that transport goods in a warehouse or similar setting can be generally referred to as "warehouse vehicles."

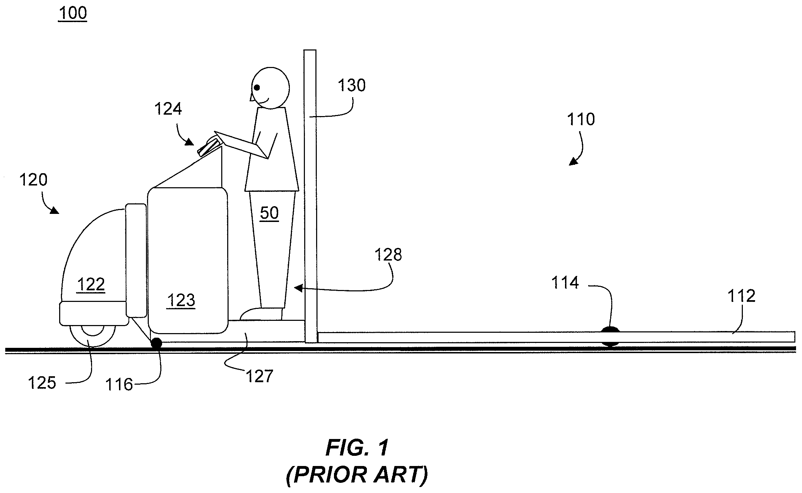

FIG. 1 is a side view of a pallet truck 100, as an example of a warehouse transport vehicle. The pallet truck 100 includes a rear payload portion 110, where a pair of forks 112 is located to engage and lift a pallet. The forks 112 can be raised and lowered. As is known in the art, the forks 112 are lowered to engage the pallet, and then raised to lift the pallet from the floor. Once the pallet is lifted, the pallet truck 100 can transport the pallet to another location, using load wheels 114 located in distal ends of the forks 112.

Pallet truck 100 includes a front drive portion 120 that includes a housing 122, within which may be located a motor and drive mechanisms (not shown). Within, or adjacent to, housing 122 is a battery compartment 123. A wheel 125 is also located in the front drive portion 120, usually beneath a linkage (not shown). A set of wheels 116 is forwardly located between the front wheel 125 and an operator area 128, which includes platform 127 for supporting an operator 50 during transportation. A back rest 130 defines a back of the operator area 128, and separates operator 50 from pallets loaded on forks 112. Pallet truck 100 is operator controlled using a set of drive controls 124, which include steering, start, drive, and stop mechanisms.

US 2004/0073359 A1 describes a camera that picks up an image of a cargo handling target and acquires image data of a mark affixed to the cargo handling target. An image processing section performs image recognition of the mark and acquires the position and size of the mark in a screen coordinate system. A real coordinate position calculating section acquires the position of the camera in a real coordinate system based on the obtained position and size of the mark. Based on the position of the camera, a deviation amount calculating section acquires a deviation amount between the current position of forks and a target position. A cargo handling control section 50 executes automatic positioning control of the forks in such a way that the deviation amount becomes zero.

GB 2 383 310 describes a vehicle switching system for automatically setting one or more performance parameters of a vehicle at pre-programmed values. This is particularly suitable for vehicles such as forklift trucks which are used to transport materials both inside and outside of buildings such as warehouses.

US 2006/0104800 A1 describes a method and a system for material transport, whereby at least one mobile transport means is detected by means of a detection device, comprising a radar or laser detecting device. Position coordinates, position angles and speed of the transport means are determined by means of a reference coordinate system and transmitted to a stationary data processing device. A central material tracking with verification of storage location is generated by means of the data processing device, whereby, particularly with use of the positing angle, the storage type for the material can be automatically determined. Operator input for the complete description of the material storage is not necessary.

### SUMMARY

The underlying technical problem is solved by the subject-matter of the independent claims. Additional embodiments are defined in the dependent claims.

In accordance with one aspect of the present invention, provided is an auto-navigating vehicle. The vehicle comprises a payload portion configured to hold or pull a payload, a drive system configured to cause the vehicle to drive, stop, and steer, the drive system including drive controls that enable a non-remote operator to drive the vehicle from an operator area proximate to the drive controls, a sensor head configured to detect information indicating the absence and presence of objects in an environment, a navigation system operatively coupled to the drive system and sensor head and configured to auto-navigate the vehicle through the environment without operator drive control. The sensor head is oriented above the drive controls and between the drive controls and payload portion, such that the sensor head is substantially out of a field of view of an operator when in the operator area.

In various embodiments, the sensor head can be a camera head comprising one or more stereo cameras.

In various embodiments, the camera head can include a plurality of stereo cameras providing a combined camera field of view of about 360 degrees in a plane parallel to a ground surface.

In various embodiments, the vehicle can further comprise a mast that supports the sensor head.

According to the invention, the vehicle is a rideable vehicle comprising, in the operator area, an operator platform configured to hold the operator. The rideable vehicle may further comprise a back rest disposed between the operator platform and the payload portion. The sensor head can be coupled to the backrest.

In various embodiments, the payload portion can comprise a movable payload portion and the sensor head remains stationary as the movable payload portion moves vertically.

In various embodiments, the vehicle can be an auto-navigating pallet truck and the movable payload portion is a pair of forks.

In various embodiments, the payload portion can comprise a movable payload portion and the sensor head can move vertically when the movable payload portion moves vertically.

In various embodiments, vehicle can be an auto-navigating pallet truck and the movable payload portion can be a pair of forks.

In various embodiments, the vehicle can further comprise at least one position detector configured to determine a movement of the sensor head and to provide offset information indicating such movement to the navigation system.

In various embodiments, the navigation system can be configured to adjust sensor data received from the sensor head using an offset determined from the offset information.

In various embodiments, the navigation system can include and can be configured to update an evidence grid that represents the environment using the adjusted sensor data.

In various embodiments, the environment can be a warehouse.

In various embodiments, the robotic vehicle can be an auto-navigating tugger and the operator area can be in front of the vehicle.

In accordance with another aspect of the invention, provided is an auto-navigating warehouse vehicle. The vehicle comprises a first portion that is vertically stationary, the first portion including drive controls configured to provide operator drive control of the vehicle when in an operator area, a second portion defining a payload area, wherein the second portion is configured to raise and lower between a first position and a second position, and a sensor head that forms part of a navigation system, wherein the sensor head is disposed above the operator area and between the operator area and the payload area so that the sensor head does not obstruct a field of view of an operator in the operator area when the second portion is in either of the first position and the second position.

In various embodiments, the operator area can be in the first portion.

In various embodiments, the operator area can be in the second portion.

In various embodiments, the operator area can be in front of the first portion.

In various embodiments, the vehicle can further comprise at least one position detector configured to determine a movement of the sensor head and to provide offset information indicating such movement to the navigation system.

In various embodiments, the navigation system can be configured to adjust sensor data received from the sensor head using an offset determined from the offset information.

In accordance with an example for better understanding the invention, provided is a method of adjusting sensor data in an auto-navigating vehicle having a sensor head that can be moved between first and second positions. The method comprises providing a robotic vehicle, determining an offset of the sensor head when moved from a first position, and the navigation system adjusting the sensor data using the offset. The robotic vehicle can comprise a first portion that is vertically stationary, the first portion including drive controls configured to provide operator drive control of the vehicle when in an operator area, a second portion defining a payload area, wherein the second portion is configured to raise and lower between a first position and a second position, and a sensor head that forms part of a navigation system, wherein the sensor head is disposed above the operator area and between the operator area and the payload area so that the sensor head does not obstruct a field of view of an operator in the operator area when the second portion is in either of the first position and the second position.

In accordance with one aspect of the present invention, provided is a robotic vehicle having a first portion that does not raise and lower, the first portion including drive mechanisms for driving the robotic vehicle, and a second portion that raises and lowers between a first position and a second position, the second portion including an operator platform. The robotic vehicle also includes a sensor head that forms part of an automated navigation system, wherein the sensor head is disposed above the operator platform so that the sensor head does not obstruct a field of view of an operator on the operator platform when the second portion is in either of the first position and the second position.

The sensor head can be a camera head comprising one or more stereo cameras.

The camera head can include a plurality of stereo cameras providing a combined camera field of view of about 360 degrees in a plane parallel to a ground surface.

The robotic vehicle can further include a mast to which the sensor head is attached.

The mast can be a single mast.

The mast can be a double mast.

The sensor head can be coupled to a backrest disposed between the operator platform and a payload portion of the robotic vehicle.

The sensor head can remain stationary as the second portion moves between the first and second positions.

The sensor head can move with the second portion as the second portion moves between the first and second positions.

The robotic vehicle can further comprise at least one position detector configured to determine a movement of the sensor head and to provide offset information indicating such movement to the automated navigation system.

The automated navigation system can be configured to adjust sensor data received from the sensor head using an offset determined from the offset information.

The automated navigation system can include and update an evidence grid that represents an environment within which the robotic vehicle travels, and the automated navigation system can use the adjusted sensor data to navigate through the environment and to update the evidence grid.

The environment can be a warehouse.

The robotic vehicle can be a robotic pallet truck.

The robotic vehicle can be a robotic tugger.

In accordance with another example for better understanding the invention, provided is a method of adjusting sensor data in a robotic vehicle having a sensor head that can be moved between first and second positions. The method includes providing a robotic vehicle that includes a first portion including a drive mechanism coupled to a navigation processor and a second portion including a platform configured to support an operator. The robotic vehicle can also include a sensor head coupled to second portion and disposed above the operator platform so that the sensor head does not obstruct a field of view of an operator on the operator platform when the second portion is in either of a first position and a second position wherein the sensor head moves with the second portion as the second portion moves between the first and second positions. The method further includes determining an offset of the sensor head when moved from the first position and adjusting sensor data received by the navigation processor from the sensor head using the offset.

In accordance with another aspect of the present invention, provided is a robotic vehicle configured for automated navigation. The robotic vehicle includes a first portion that does not raise and lower, the first portion including drive mechanisms for driving the robotic vehicle, a second portion that raises and lowers between a first position and a second position, the second portion including an operator platform, and a camera head that forms part of an automated navigation system. The camera head is disposed on a mast above the operator platform so that the camera head does not obstruct a field of view of an operator on the operator platform when the second portion is in either of a first position and a second position.

The camera head can move with the second portion as the second portion moves between the first and second positions.

The robotic vehicle can further include at least one position detector configured to determine a movement of the sensor head and to provide offset information indicating such movement to the automated navigation system.

The automated navigation system can include and update an evidence grid that represents an environment within which the robotic vehicle travels, and the automated navigation system can use the adjusted sensor data to navigate through the environment and to update the evidence grid.

In accordance with the present invention, provided is a robotic vehicle that includes a vision system configured for automated navigation, wherein the vision system includes a camera head attached to the robotic vehicle to avoid operator field of view obstruction when an operator platform of the robotic vehicle is in either of a first position and a second position.

The robotic vehicle can be a robotic pallet truck or tugger.

The second position can be a height that is greater than a height of the first position.

The camera head can be attached to the robotic vehicle via at least one mast.

The at least one mast can be a single mast.

The at least one mast can be a double mast.

The at least one mast can remain stationary relative to the operator platform, as the operator platform raises and lowers.

The at least one mast can raise and lower with the operator platform.

The vision system can include a position sensor that detects relocation of the camera head.

In accordance with another aspect of the present disclosure, provided is a robotic vehicle having a drive mechanism coupled to a navigation processor and memory configured to navigate the vehicle though a warehouse without operator control; a set of operator controls that enable the operator to optionally control the vehicle; an operator platform configured to support the operator such that the operator controls are accessible to the operator; at least one environment sensor coupled to the navigation processor and located on the vehicle above the operator platform such that when the operator is on the platform the sensor does not obstruct a field of view of the operator in a direction of travel of the vehicle.

A vehicle configured for robotic or manual navigation within an environment including: a drive mechanism coupled to a automated navigation processor and a set of operator controls; a platform configured to support an operator at the controls during navigation; at least one sensor coupled to the navigation processor and secured to a mast that orients the at least one sensor above the operator without obstructing a field of view of the operator during navigation when the platform is in either of a first and a second position.

### BRIEF DESCRIPTION OF THE DRAWINGS

The present invention will become more apparent in view of the attached drawings and accompanying detailed description. The embodiments depicted therein are provided by way of example, not by way of limitation, wherein like reference numerals refer to the same or similar elements. The drawings are not necessarily to scale, emphasis instead being placed upon illustrating aspects of the invention. In the drawings:
FIG. 1 is a side view of a pallet truck according to the prior art;
FIG. 2 is a side view of a first embodiment of an auto-navigating warehouse vehicle, according to aspects of the present invention;
FIGS. 3A-3D are views of a second embodiment of an auto-navigating warehouse vehicle, according to aspects of the present invention;
FIGS. 4A-4D are views of a third embodiment of an auto-navigating warehouse vehicle, according to aspects of the present invention;
FIGS. 5A-5D are views of a fourth embodiment of an auto-navigating warehouse vehicle, according to aspects of the present invention;
FIGS. 6A-6C are views of a fifth embodiment of an auto-navigating warehouse vehicle, according to aspects of the present invention; and
FIG. 7 is a block diagram of an embodiment of an automated navigation system that includes sensor position determination for an auto-navigating warehouse vehicle, according to aspects of the present invention.

### DETAILED DESCRIPTION OF PREFERRED EMBODIMENTS

Various exemplary embodiments will be described more fully hereinafter with reference to the accompanying drawings, in which some exemplary embodiments are shown. The present inventive concept may, however, be embodied in many different forms and should not be construed as limited to the exemplary embodiments set forth herein.

It will be understood that, although the terms first, second, etc. are be used herein to describe various elements, these elements should not be limited by these terms. These terms are used to distinguish one element from another, but not to imply a required sequence of elements. For example, a first element can be termed a second element, and, similarly, a second element can be termed a first element. As used herein, the term "and/or" includes any and all combinations of one or more of the associated listed items.

It will be understood that when an element is referred to as being "on" or "connected" or "coupled" to another element, it can be directly on or connected or coupled to the other element or intervening elements can be present. In contrast, when an element is referred to as being "directly on" or "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements, and/or components, but do not preclude the presence or addition of one or more other features, steps, operations, elements, components, and/or groups thereof.

Spatially relative terms, such as "beneath," "below," "lower," "above," "upper" and the like may be used to describe an element and/or feature's relationship to another element(s) and/or feature(s) as, for example, illustrated in the figures. It will be understood that the spatially relative terms are intended to encompass different orientations of the device in use and/or operation in addition to the orientation depicted in the figures. For example, if the device in the figures is turned over, elements described as "below" and/or "beneath" other elements or features would then be oriented "above" the other elements or features. The device may be otherwise oriented (e.g., rotated 90 degrees or at other orientations) and the spatially relative descriptors used herein interpreted accordingly.

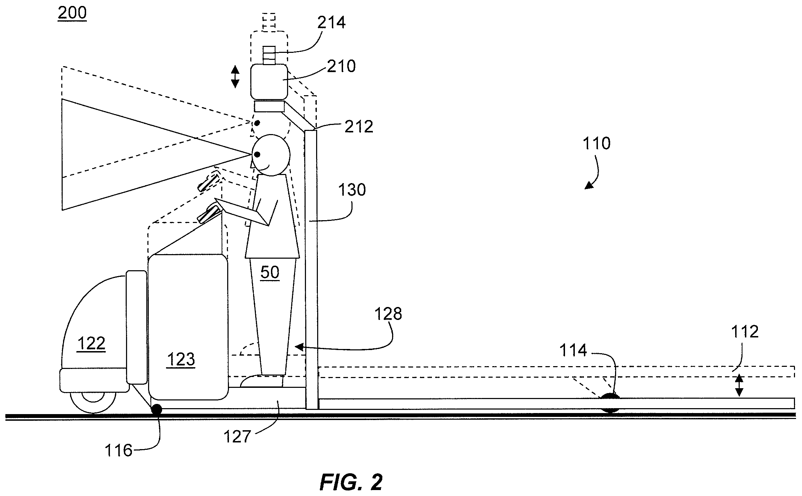

FIG. 2 is a side view of a first embodiment of a rideable auto-navigating warehouse vehicle with field-of-view (FOV) enhancing navigation sensor positioning, according to aspects of the present invention. In this embodiment, the auto-navigating warehouse vehicle takes the form of an auto-navigating pallet truck 200. Where portions of the auto-navigating pallet truck 200 are similar to corresponding portions of the pallet truck 100 of FIG. 1, the same reference numbers are used. The auto-navigating pallet truck 200 includes at least one navigation processor, storage media and a sensor head mounted on a mast. In the embodiment of FIG. 2, the auto-navigating pallet truck 200 is configured with self-navigating capability so that, for example, it could self- or auto- navigate through a facility, such as a warehouse or the like. Therefore, while shown, operator 50 may be optional with respect to navigation. For example, operator 50 may ride along while the auto-navigating pallet truck 200 navigates (i.e., drives) through a warehouse environment.

The navigation capability can be embodied in an apparatus that takes the form of at least one processor executing computer program code stored in at least one computer memory. The program code includes logic for navigating the warehouse transport vehicle (e.g., a pallet truck or other such vehicle) through an environment based on inputs from one or more sensors and preferably an electronic representation of the environment. Such processor or processors are operatively coupled to the start, stop, drive and steering mechanisms of the warehouse transport vehicle, in this embodiment, and to drive and navigate the auto-navigating warehouse transport vehicle through the environment. The hardware, software, and/or firmware comprising the navigation system can be located on the auto-navigating pallet truck 200 (e.g., within housing 122), remotely, or some combination thereof.

As an example, in some embodiments, the navigation system can employ an evidence grid approach, where the evidence grid is automatically updated as the auto-navigating vehicle travels through the environment, e.g., using information gathered by sensor head 210. The sensor head 210 can comprise one or more stereo cameras for collecting environmental data used for generating and updating a ma of the environment based on the evidence grid. For example, an auto-navigating warehouse vehicle in accordance with the present invention can use a navigation system that uses evidence grids as described in U. S. Patent No. 7,446,766, entitled *Multidimensional Evidence Grids And System And Methods For Applying* Same, and/or U. S. Patent Pub. US 2009-0119010, entitled *Multidimensional Evidence Grids and System and Methods for Applying* Same.

In FIG. 2, the sensor head 210 is movable in a vertical direction. The side view of the auto-navigating vehicle 200 shown in FIG. 2 shows a rear-mounted mast 212, which supports sensor head 210 and warning light (or light stack) 214. In this embodiment, the mast 212 is coupled to, or made part of, the back rest 130. Therefore, in this embodiment, the sensor head 210 (and light stack 214) moves vertically as the operator platform 127, backrest 130, and forks 112 raise and lower. In FIG. 2, the solid lines indicate the movable portions in a lowered (first) position. The dashed lines indicate movable portions of the pallet truck in a raised (second) position. In view of the vertical movement of the sensor head 210, e.g., one or more stereo cameras, the navigation system may determine a camera head offset that can be used as an adjustment factor when updating the evidence grid.

In some embodiments, the range of motion, which in this embodiment is vertical, can be known in advance and programmed into the navigation system used by the auto-navigating pallet truck 200. The vertical displacement or movement of the camera head 210 will be the same as that of the operator platform 127, backrest 130, and forks 112, in this embodiment. Therefore, detection, measurement, or calculation of the vertical change of distance or displacement can be determined with any of a variety of types of detectors and sensors. The determined vertical displacement can then be used as an adjustment or offset by the navigation system.

In some embodiments, two different positions can be defined for the camera head, a first position when the operator platform 127, backrest 130, and forks 112 are lowered and a second position when the operator platform 127, backrest 130, and forks 112 are raised. In such a case, either the first position or the second position can be a "home" position and the offset can be preprogrammed for the other of the first and second positions. Therefore, only a detection or sensing of whether the operator platform 127, backrest 130, and forks 112 are raised or lowered would be required to determine whether or not to apply the offset within the navigation system.

In FIG. 2, the movable mast 212 and sensor head 210 are positioned in a manner that does not obstruct the operator's 50 field of view (FOV) in the driving or forward direction, or other directions. And nothing on the auto-navigating pallet truck 200 materially obstructs the FOV of the sensor head 210.

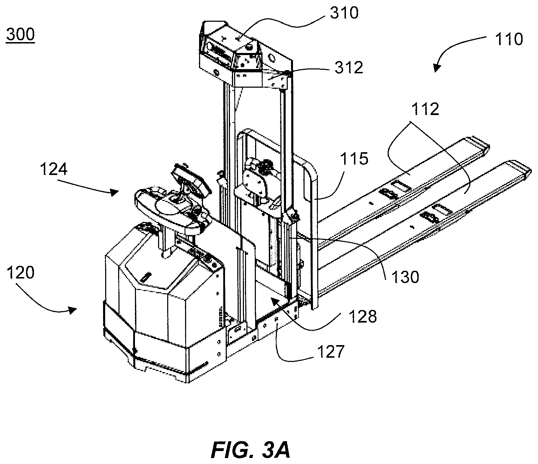

FIGS. 3A-3D provide different views of a second embodiment of a rideable auto-navigating warehouse vehicle with FOV enhancing navigation sensor positioning, according to aspects of the present invention.

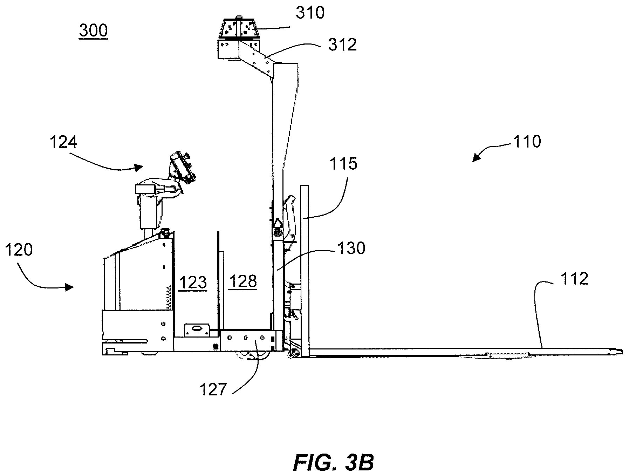

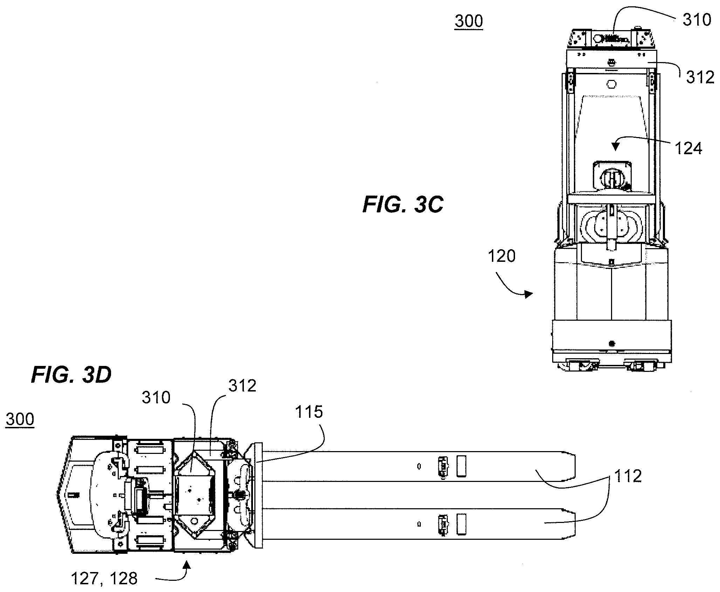

FIG. 3A is a perspective view of the second embodiment of an auto-navigating warehouse vehicle in the form of a pallet truck 300, which has a sensor head 310 and mast 312. FIG. 3B provides a side view of the auto-navigating pallet truck 300 of FIG. 3A. FIG. 3C provides a front view of the auto-navigating pallet truck 300 of FIG. 3A. And FIG. 3D provides a top view of the auto-navigating pallet truck 300 of FIG. 3A.

As with the embodiment of FIG. 2, the auto-navigating pallet truck 300 of FIGS. 3A-3D, the sensor head 310 can be or include a set of stereo cameras as a vision system, such as described in U. S. Patent No. 7,446,766, entitled *Multidimensional Evidence Grids and System and Methods for Applying* Same, and/or U. S. Patent Pub. US 2009-0119010, entitled *Multidimensional Evidence Grids and System and Methods for Applying* Same. In various embodiments, the vision system can be or include a set of stereo cameras, such as those described in U. S. Patent Application Serial No. 29/398127, filed July 26, 2012, entitled *Multi-Camera Head.* Therefore, in various embodiments, the sensor head 310 may be referred to as camera head 310, which will include one or more stereo cameras. In some embodiments, camera head 310 can include a plurality of stereo cameras providing a combined camera field of view of about 360 degrees in a plane parallel to a ground surface GS.

In the embodiment of FIGS. 3A-3D the mast 312 and sensor head 310 are not vertically movable with the forks 112. The back rest 130 does not move with the forks. Rather, a payload stop 115 defines a front end of the payload area 110, and is coupled to and moves with the forks 112. The operator platform 127 and operator area 128 also do not vertically move with the forks 112. Therefore, the payload stop 115 and forks move vertically independent of the remaining portions of the auto-navigating pallet truck 300. As a result, the sensor head 310 does not vertically move and associated offset and adjustment logic can be avoided.

The sensor head 310 is located above and to the rear of the operator compartment 128, such that it does not obstruct the view of an operator. And nothing on the auto-navigating pallet truck 300 materially obstructs the FOV of the sensor head 310.

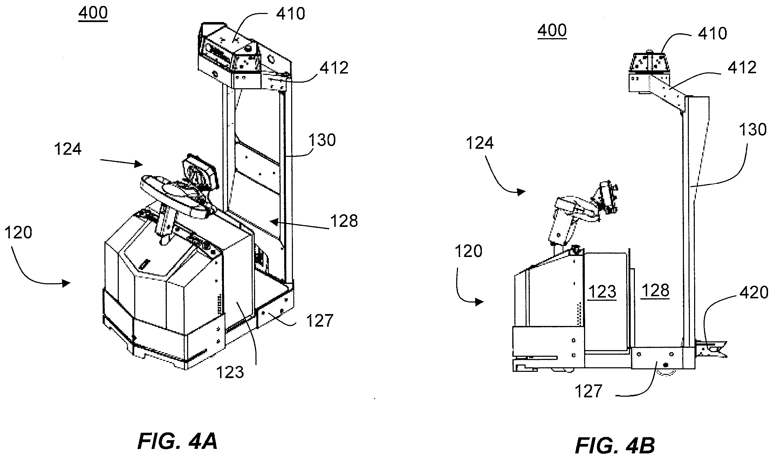

FIGS. 4A-4D provide different views of a third embodiment of an auto-navigating warehouse vehicle with FOV enhancing navigation sensor positioning, according to aspects of the present invention.

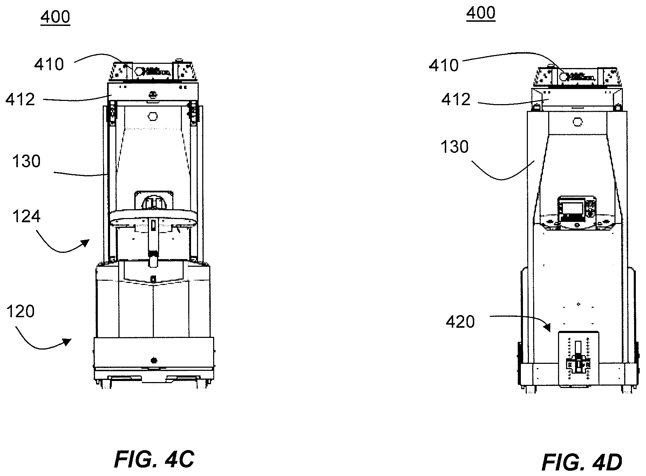

FIG. 4A is a perspective view of the auto-navigating warehouse vehicle in the form of a rideable auto-navigating tugger 400, which has a sensor head 410 and mast 412. FIG. 4B provides a side view of the auto-navigating tugger 400 of FIG. 4A. FIG. 4C provides a front view of the auto-navigating tugger 400 of FIG. 4A. And FIG. 4D provides a rear view of the auto-navigating tugger 400 of FIG. 4A.

The auto-navigating tugger 400 is configured with auto-navigation equipment, so that it could navigate through the warehouse without an operator, as discussed above. Where the navigation system requires a vision system, the sensor head 410 can include one or more stereo cameras and be referred to as a camera head 410, as discussed above. In some embodiments, camera head 410 can include a plurality of stereo cameras providing a combined camera field of view of about 360 degrees in a plane parallel to a ground surface GS.

The auto-navigating tugger 400 includes a platform 127 for supporting an operator, a operator area 128, and a back rest 130, as discussed above. Unlike the pallet trucks previously describer, the auto-navigating tugger does not include forks, or other payload portions, that raise and lower. Rather, the auto-navigating tugger 400 includes a hitch 420 configured to engage a cart, in a manner known in the art. Thus, the sensor head 410 will be substantially vertically stable, and secured to back rest 130 via the mast 412.

The sensor head 410 is located above and to the rear of the operator compartment 128, such that it does not obstruct the view of an operator. And nothing on the auto-navigating pallet truck 400 materially obstructs the FOV of the sensor head 410.

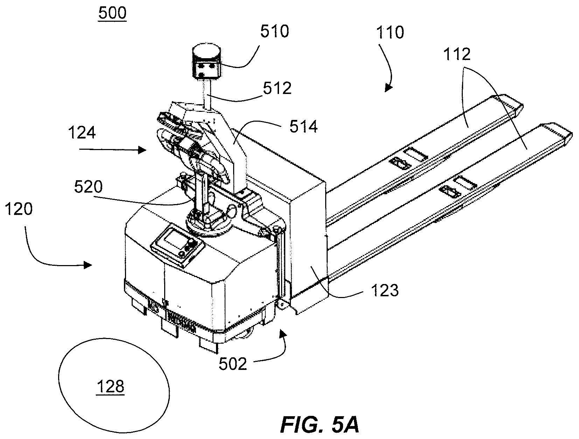

FIGS. 5A-5D provide different views of a fourth embodiment of an auto-navigating warehouse vehicle with FOV enhancing navigation sensor positioning, according to aspects of the present invention.

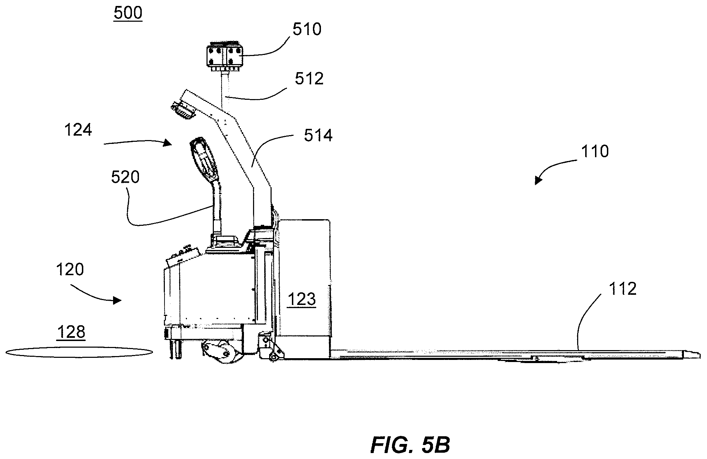

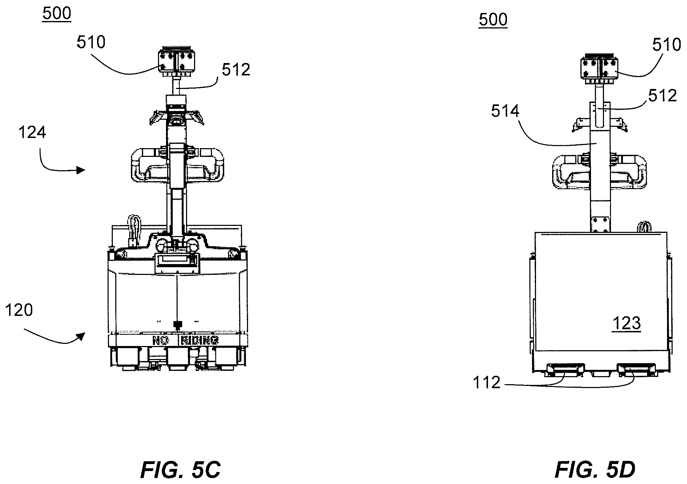

FIG. 5A is a perspective view of the auto-navigating warehouse vehicle in the form of a non-rideable auto-navigating pallet truck 500, which has a sensor head 510 and mast 512. FIG. 5B provides a side view of the auto-navigating pallet truck 500 of FIG. 5A. FIG. 5C provides a front view of the auto-navigating pallet truck 500 of FIG. 5A. And FIG. 5D provides a rear view of the auto-navigating pallet truck 500 of FIG. 5A.

The auto-navigating pallet truck 500 is configured with auto-navigation equipment, so that it could navigate through the warehouse without an operator, as discussed above. Where the navigation system requires a vision system, the sensor head 510 can include one or more stereo cameras, as discussed above. Here, since the auto-navigating pallet truck is not rideable, the operator area 128 is in front of the vehicle, proximate to the drive controls 124.

The auto-navigating pallet truck 500 has a handle 520 that includes the drive controls 124. The mast 512 is connects to a main body 502 of the pallet truck 500 via an arm 514. In this embodiment, the sensor head 510, mast 512, and arm 510 do not raise and lower with the forks 112. Additionally, in this embodiment, the sensor head 510, mast 512, and arm 510 are located behind the handle 520 and the drive controls 124 such that they do not block a FOV of an operator when moving forward. And nothing on the auto-navigating pallet truck 500 materially obstructs the FOV of the sensor head 510.

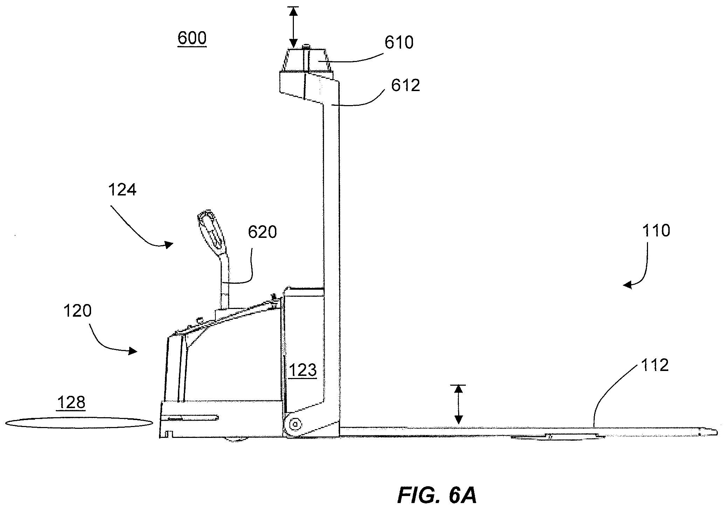

FIGS. 6A-6C provide different views of a fifth embodiment of an auto-navigating warehouse vehicle with FOV enhancing navigation sensor positioning, according to aspects of the present invention.

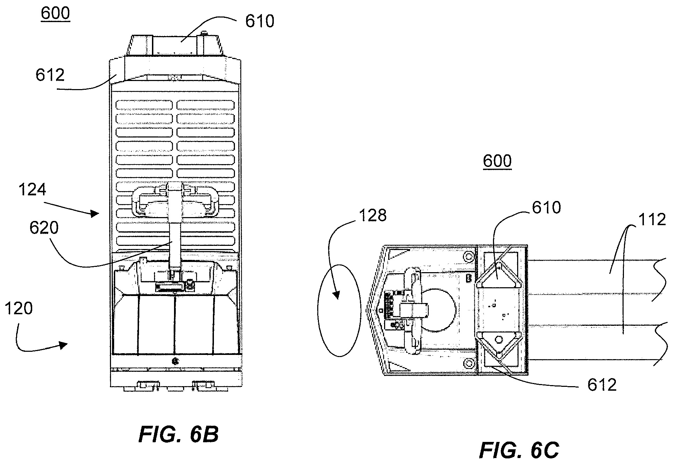

FIG. 6A is a side view of the auto-navigating warehouse vehicle in the form of a non-rideable auto-navigating pallet truck 600, which has a sensor head 610 and mast 612. FIG. 6B provides a front view of the auto-navigating pallet truck 600 of FIG. 6A. And FIG. 6C provides a top view of the auto-navigating pallet truck 600 of FIG. 6A.

The auto-navigating pallet truck 600 is configured with auto-navigation equipment, so that it could navigate through the warehouse without an operator, as discussed above. Where the navigation system requires a vision system, the sensor head 610 can include one or more stereo cameras, as discussed above. Here, since the auto-navigating pallet truck is not rideable, the operator area 128 is in front of the vehicle, proximate to the drive controls 124.

The auto-navigating pallet truck 600 has a handle 620 that includes the drive controls 124. In this embodiment, the sensor head 610 is secured to a mast 612, which connects to a main body 620 of the auto-navigating pallet truck 600. In this embodiment, the mast 612 is configured to raise and lower with the forks 112.

In this embodiment, the sensor head 610 is movable in a vertical direction. The side view of the auto-navigating vehicle 600 shown in FIG. 6A shows a rear-mounted mast 612, which supports sensor head 610. In this embodiment, the sensor head 610 moves vertically as the forks 112 raise and lower. In view of the vertical movement of the sensor head 610, e.g., one or more stereo cameras, the navigation system may determine a camera head offset that can be used as an adjustment factor when updating an evidence grid map or the like used in the auto-navigation.

In some embodiments, the range of motion, which in this embodiment is vertical, can be known in advance and programmed into the navigation system used by the auto-navigating pallet truck 600. The vertical displacement or movement of the camera head 610 will be the same as that of the forks 112, in this embodiment. Therefore, detection, measurement, or calculation of the vertical change of distance or displacement can be determined with any of a variety of types of detectors and sensors. The determined vertical displacement can then be used as an adjustment or offset by the navigation system.

In some embodiments, two different positions can be defined for the camera head, a first position when the forks 112 are lowered and a second position when the forks 112 are raised. In such a case, either the first position or the second position can be a "home" position and the offset can be preprogrammed for the other of the first and second positions. Therefore, only a detection or sensing of whether the forks 112, mast 610, or sensor head 610 are raised or lowered would be required to determine whether or not to apply the offset within the navigation system.

Additionally, in this embodiment, the sensor head 610 and mast 612 are located behind the handle 620 and the drive controls 124 such that they do not block a FOV of an operator when moving forward. And nothing on the auto-navigating pallet truck 600 materially obstructs the FOV of the sensor head 610.

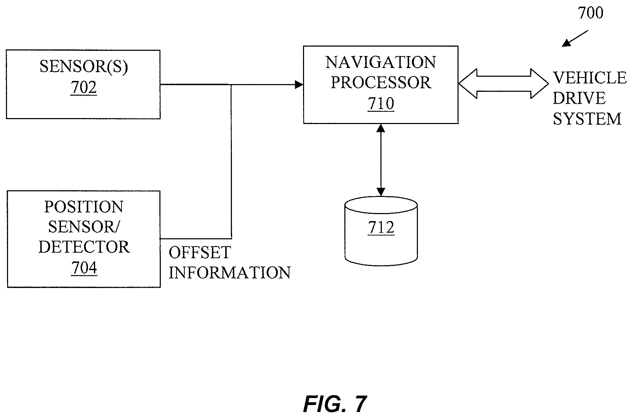

FIG. 7 is a block diagram of an embodiment of an automated navigation system that includes sensor position determination for an auto-navigating warehouse vehicle, according to aspects of the present invention.

The navigation system 700 includes sensor position determination capability for an auto-navigating vehicle, such as those shown and described herein. A navigation processor 710 can perform the primary computer-based functioning of the navigation system, such as send control information to a vehicle drive system of the robotic vehicle, e.g., auto-navigating pallet truck or tugger, as discussed above. In this embodiment, navigation processor 710 uses an evidence grid stored in a storage media 712 that represents the environment for navigation. Storage media 712 can be or include, for example, a non-transitory electronic, magnetic, or optical storage device. The navigation processor 710 can user data from sensor(s) 702, e.g., camera head 310, to determine a location of the robotic vehicle within the environment, using the evidence grid as a frame of reference. Navigation processor 710 can also use the sensor data to update the evidence grid.

Position sensors/ detectors 704 can detect, sense, or otherwise determine the position of the sensor(s) 702, e.g., whether camera head 310 is in the first position, second position, or somewhere in between if called for by the particular embodiment. The information can be provided by the position sensor/ detector 704 to the navigation processor 710 as offset information. Accordingly, the navigation processor 710 takes the offset into account when determining location of the auto-navigating warehouse vehcile relative to the evidence grid and when updating the evidence grid.

As a result, the mast and sensor (or camera) head can be positioned on a auto-navigating warehouse (or robotic) vehicle without obstructing the field of view of the operator, whether the operator platform or payload area are in a lowered or raised position.

Coupling the mast and sensor (e.g., camera) head to the robotic vehicle away from the drive portion of the robotic vehicle can also significantly reduce vibration at the sensor (e.g., camera) head and, consequently, reduce errors in the navigation system.

## Claims

1. An auto-navigating vehicle (200, 300, 400, 500, 600), wherein the vehicle (200, 300, 400, 500, 600) is a rideable vehicle (200, 300, 400) comprising: in an operator area (128), an operator platform (127) configured to hold an operator (50), and a sensor head (210,310,410) that can be moved between first and second positions, the vehicle comprising:
a robotic vehicle (200, 300, 400, 500, 600), including:
a first portion that is vertically stationary, the first portion including drive controls (124) configured to provide operator (50) drive control of the vehicle when in the operator area (128);
a second portion defining a payload area (110), wherein the second portion is configured to raise and lower between a first position and a second position; and
**characterized in that** the robotic vehicle (200, 300, 400, 500, 600) is auto-navigating and further **characterized by**,
a sensor head (210,310,410) supported by a mast (212), wherein the sensor head forms part of a navigation system (700), wherein the sensor head is disposed above the operator area and between the operator area and the payload area so that the sensor head and mast (212) do not obstruct a field of view of the operator (50) in the operator area when the second portion is in either of the first position and the second position;
the robotic vehicle (200, 300, 400, 500, 600) configured to determine an offset of the sensor head when moved from the first position to the second position;
the navigation system configured to adjust the sensor data using the offset; and
the robotic vehicle (200, 300, 400, 500, 600) configured to auto-navigate based on the adjusted sensor data.

2. The auto-navigating vehicle (200, 300, 400, 500, 600) of claim 1, wherein the sensor head (210,310,410) is a camera head (310, 410) comprising one or more stereo cameras; and optionally,
wherein the camera head includes a plurality of stereo cameras providing a combined camera field of view of about 360 degrees in a plane parallel to a ground surface (GS).

3. The auto-navigating vehicle (200, 300, 400, 500, 600) of claim 1, wherein the rideable vehicle (200, 300, 400) further comprises:
a back rest (130) disposed between the operator platform and the payload area (110),
wherein the sensor head is coupled to the backrest.

4. The auto-navigating vehicle (200, 300, 400, 500, 600) of claim 1, wherein the payload area comprises a movable payload portion and the sensor head remains stationary as the movable payload portion moves vertically; and optionally
wherein the vehicle is an auto-navigating pallet truck (100) and the movable payload portion is a pair of forks (112).

5. The auto-navigating vehicle (200, 300, 400, 500, 600) of claim 1, wherein the payload area comprises a movable payload portion and the sensor head moves vertically when the movable payload portion moves vertically, and optionally,
wherein the vehicle is an auto-navigating pallet truck (200, 300, 500, 600) and the movable payload portion is a pair of forks (112).

6. The auto-navigating vehicle (200, 300, 400, 500, 600) of claim 5, wherein the auto-navigating vehicle (200, 300, 400, 500, 600) is configured to:
determine, via at least one position detector (704), a movement of the sensor head and to provide, via the position detector (704), offset information indicating such movement to the navigation system, and optionally,
to adjust, by the navigation system, sensor data received from the sensor head using an offset determined from the offset information, and optionally,
to update, by the navigation system, an evidence grid that represents the environment using the adjusted sensor data.

7. The auto-navigating vehicle (200, 300, 400, 500, 600) of claim 1, and any of:
a) wherein the environment is a warehouse; and
b) wherein the robotic vehicle is an auto-navigating tugger and the operator area is in front of the vehicle.

8. The auto-navigating vehicle (200, 300, 400, 500, 600) of claim 1, and one of:
a) wherein the operator area is in the first portion; or
b) wherein the operator area is in the second portion; or
c) wherein the operator area is in front of the first portion.

9. The auto-navigating vehicle (200, 300, 400, 500, 600) of claim 1, wherein the auto-navigating vehicle (200, 300, 400, 500, 600) is configured to determine, by at least one position detector (704), a movement of the sensor head and providing, by the position detector (704), offset information indicating such movement to the navigation system.

10. The auto-navigating vehicle (200, 300, 400, 500, 600) of claim 9, configured to adjust, by the navigation system, sensor data received from the sensor head using an offset determined from the offset information.

11. The vehicle of claim 1, and one of:
a) wherein the operator area is in the first portion; or
b) wherein the operator area is in the second portion; or
c) wherein the operator area is in front of the first portion.

12. The vehicle of claim 1, further comprising:
at least one position detector (704) configured to determine a movement of the sensor head and to provide offset information indicating such movement to the navigation system.

13. The vehicle of claim 12, wherein the navigation system is configured to adjust sensor data received from the sensor head using an offset determined from the offset information.

## Patentansprüche

1. Selbstnavigierendes Fahrzeug (200, 300, 400, 500, 600), wobei das Fahrzeug (200, 300, 400, 500, 600) ein Mitfahrfahrzeug (200, 300, 400) ist, umfassend: in einem Bedienerbereich (128), eine Bedienerplattform (127), die konfiguriert ist, um einen Bediener (50) aufzunehmen, und einen Sensorkopf (210, 310, 410), der zwischen ersten und zweiten Positionen bewegt werden kann, das Fahrzeug umfassend:
ein Roboterfahrzeug (200, 300, 400, 500, 600), einschließlich:
eines ersten Abschnitts, der vertikal stationär ist, wobei der erste Abschnitt Fahrsteuerungen (124) einschließt, die konfiguriert sind, um eine Fahrsteuerung des Fahrzeugs durch den Bediener (50) bereitzustellen, wenn er sich im Bedienerbereich (128) befindet;
eines zweiten Abschnitts, der einen Nutzlastbereich (110) definiert, wobei der zweite Abschnitt konfiguriert ist, um sich zwischen einer ersten Position und einer zweiten Position anzuheben und abzusenken; und
**dadurch gekennzeichnet, dass** das Roboterfahrzeug (200, 300, 400, 500, 600) selbstnavigierend ist und ferner **gekennzeichnet durch**
einen Sensorkopf (210, 310, 410), der von einem Mast (212) gestützt wird, wobei der Sensorkopf einen Teil eines Navigationssystems (700) bildet, wobei der Sensorkopf über dem Bedienerbereich und zwischen dem Bedienerbereich und dem Nutzlastbereich angeordnet ist, sodass der Sensorkopf und der Mast (212) ein Sichtfeld des Bedieners (50) im Bedienerbereich nicht behindern, wenn sich der zweite Abschnitt in einer von der ersten Position und der zweiten Position befindet;
das Roboterfahrzeug (200, 300, 400, 500, 600), das konfiguriert ist, um einen Versatz des Sensorkopfs zu bestimmen, wenn dieser von der ersten Position in die zweite Position bewegt wird;
das Navigationssystem, das konfiguriert ist, um die Sensordaten unter Verwendung des Versatzes anzupassen; und das Roboterfahrzeug (200, 300, 400, 500, 600), das konfiguriert ist, um basierend auf den angepassten Sensordaten selbst zu navigieren.

2. Selbstnavigierendes Fahrzeug (200, 300, 400, 500, 600) nach Anspruch 1, wobei der Sensorkopf (210, 310, 410) ein Kamerakopf (310, 410) ist, der eine oder mehrere Stereokameras umfasst; und wobei
optional der Kamerakopf eine Vielzahl von Stereokameras einschließt, die ein kombiniertes Kamerasichtfeld von etwa 360 Grad in einer Ebene parallel zu einer Bodenoberfläche (GS) bereitstellen.

3. Selbstnavigierendes Fahrzeug (200, 300, 400, 500, 600) nach Anspruch 1, wobei das Mitfahrfahrzeug (200, 300, 400) ferner umfasst:
eine Rückenlehne (130), die zwischen der Bedienerplattform und dem Nutzlastbereich (110) angeordnet ist,
wobei der Sensorkopf an die Rückenlehne gekoppelt ist.

4. Selbstnavigierendes Fahrzeug (200, 300, 400, 500, 600) nach Anspruch 1, wobei der Nutzlastbereich einen beweglichen Nutzlastabschnitt umfasst und der Sensorkopf stationär bleibt, während sich der bewegliche Nutzlastabschnitt vertikal bewegt; und wobei
optional das Fahrzeug ein selbstnavigierender Hubwagen (100) ist und der bewegliche Nutzlastabschnitt ein Paar Gabeln (112) ist.

5. Selbstnavigierendes Fahrzeug (200, 300, 400, 500, 600) nach Anspruch 1, wobei der Nutzlastbereich einen beweglichen Nutzlastabschnitt umfasst und sich der Sensorkopf vertikal bewegt, wenn sich der bewegliche Nutzlastabschnitt vertikal bewegt, und wobei
optional das Fahrzeug ein selbstnavigierender Hubwagen (200, 300, 500, 600) ist und der bewegliche Nutzlastabschnitt ein Paar Gabeln (112) ist.

6. Selbstnavigierendes Fahrzeug (200, 300, 400, 500, 600) nach Anspruch 5, wobei das selbstnavigierende Fahrzeug (200, 300, 400, 500, 600) konfiguriert ist zum:
Bestimmen, über mindestens einen Positionsdetektor (704), einer Bewegung des Sensorkopfes und Bereitstellen, über den Positionsdetektor (704), von Versatzinformationen, die eine solche Bewegung dem Navigationssystem anzeigen, und optional
Anpassen, durch das Navigationssystem, von vom Sensorkopf empfangenen Sensordaten unter Verwendung eines aus den Versatzinformationen bestimmten Versatzes, und optional
Aktualisieren, durch das Navigationssystem, eines Evidenzrasters, das die Umgebung repräsentiert, unter Verwendung der angepassten Sensordaten.

7. Selbstnavigierendes Fahrzeug (200, 300, 400, 500, 600) nach Anspruch 1, und eines von:
a) wobei die Umgebung eine Lagerräumlichkeit ist; und
b) wobei das Roboterfahrzeug ein selbstnavigierender Schlepper ist und sich der Bedienerbereich vor dem Fahrzeug befindet.

8. Selbstnavigierendes Fahrzeug (200, 300, 400, 500, 600) nach Anspruch 1 und eines von:
a) wobei der Bedienerbereich in dem ersten Abschnitt ist; oder
b) wobei der Bedienerbereich in dem zweiten Abschnitt ist; oder
c) wobei der Bedienerbereich vor dem ersten Abschnitt ist.

9. Selbstnavigierendes Fahrzeug (200, 300, 400, 500, 600) nach Anspruch 1, wobei das selbstnavigierende Fahrzeug (200, 300, 400, 500, 600) konfiguriert ist, um durch mindestens einen Positionsdetektor (704) eine Bewegung des Sensorkopfes zu bestimmen und durch den Positionsdetektor (704) Versatzinformationen, die eine solche Bewegung anzeigen, an das Navigationssystem bereitzustellen.

10. Selbstnavigierendes Fahrzeug (200, 300, 400, 500, 600) nach Anspruch 9, das konfiguriert ist, um durch das Navigationssystem vom Sensorkopf empfangene Sensordaten unter Verwendung eines aus den Versatzinformationen bestimmten Versatzes anzupassen.

11. Fahrzeug nach Anspruch 1, und eines von:
a) wobei der Bedienerbereich in dem ersten Abschnitt ist; oder
b) wobei der Bedienerbereich in dem zweiten Abschnitt ist; oder
c) wobei der Bedienerbereich vor dem ersten Abschnitt ist.

12. Fahrzeug nach Anspruch 1, ferner umfassend:
mindestens einen Positionsdetektor (704), der konfiguriert ist, um eine Bewegung des Sensorkopfes zu bestimmen und dem Navigationssystem Versatzinformationen bereitzustellen, die eine solche Bewegung anzeigen.

13. Fahrzeug nach Anspruch 12, wobei das Navigationssystem konfiguriert ist, um vom Sensorkopf empfangene Sensordaten unter Verwendung eines aus den Versatzinformationen bestimmten Versatzes anzupassen.

## Revendications

1. Véhicule (200, 300, 400, 500, 600) à navigation autonome, dans lequel le véhicule (200, 300, 400, 500, 600) est un véhicule (200, 300, 400) sur lequel on peut monter comprenant : dans une zone d'opérateur (128), une plate-forme d'opérateur (127) conçue pour accueillir un opérateur (50), et une tête de capteur (210, 310, 410) qui peut être déplacée entre des première et seconde positions, le véhicule comprenant :
un véhicule (200, 300, 400, 500, 600) robotique, comportant :
une première partie qui est verticalement stationnaire, la première partie comportant des commandes de conduite (124) conçues pour fournir à un opérateur (50) une commande de conduite du véhicule lorsqu'il est dans la zone d'opérateur (128) ;
une seconde partie définissant une zone de charge utile (110), dans lequel la seconde partie est conçue pour se lever et s'abaisser entre une première position et une seconde position ; et
**caractérisé en ce que** le véhicule (200, 300, 400, 500, 600) robotique est à navigation autonome et **caractérisé en outre par**,
une tête de capteur (210, 310, 410) supportée par un mât (212), dans lequel la tête de capteur fait partie d'un système de navigation (700), dans lequel la tête de capteur est disposée au-dessus de la zone d'opérateur et entre la zone d'opérateur et la zone de charge utile de sorte que la tête de capteur et le mât (212) n'obstruent pas un champ de vision de l'opérateur (50) dans la zone d'opérateur lorsque la seconde partie est soit dans la première position soit dans la seconde position ;
le véhicule (200, 300, 400, 500, 600) robotique étant conçu pour déterminer un décalage de la tête de capteur lors d'un déplacement de la première position à la seconde position ;
le système de navigation étant configuré pour ajuster les données de capteur à l'aide du décalage ; et le véhicule (200, 300, 400, 500, 600) robotique étant configuré pour naviguer de manière autonome en fonction des données de capteur ajustées.

2. Véhicule (200, 300, 400, 500, 600) à navigation autonome selon la revendication 1, dans lequel la tête de capteur (210, 310, 410) est une tête de caméra (310, 410) comprenant une ou plusieurs caméras stéréo ; et facultativement,
dans lequel la tête de caméra comporte une pluralité de caméras stéréo fournissant un champ de vision de caméra combiné d'environ 360 degrés dans un plan parallèle à une surface de sol (GS).

3. Véhicule (200, 300, 400, 500, 600) à navigation autonome selon la revendication 1, dans lequel le véhicule (200, 300, 400) sur lequel on peut monter comprend en outre :
un dossier (130) disposé entre la plate-forme d'opérateur et la zone de charge utile (110),
dans lequel la tête de capteur est accouplée au dossier.

4. Véhicule (200, 300, 400, 500, 600) à navigation autonome selon la revendication 1, dans lequel la zone de charge utile comprend une partie de charge utile déplaçable et la tête de capteur demeure stationnaire à mesure que la partie de charge utile déplaçable se déplace verticalement ; et facultativement
dans lequel le véhicule est un transpalette à navigation autonome (100) et la partie de charge utile déplaçable est une paire de fourches (112).

5. Véhicule (200, 300, 400, 500, 600) à navigation autonome selon la revendication 1, dans lequel la zone de charge utile comprend une partie de charge utile déplaçable et la tête de capteur se déplace verticalement lorsque la partie de charge utile déplaçable se déplace verticalement, et facultativement,
dans lequel le véhicule est un transpalette à navigation autonome (200, 300, 500, 600) et la partie de charge utile déplaçable est une paire de fourches (112).

6. Véhicule à navigation autonome (200, 300, 400, 500, 600) selon la revendication 5, dans lequel le véhicule (200, 300, 400, 500, 600) à navigation autonome est configuré pour :
déterminer, par l'intermédiaire d'au moins un détecteur de position (704), un déplacement de la tête de capteur et pour fournir, par l'intermédiaire du détecteur de position (704), des informations de décalage indiquant un tel déplacement au système de navigation, et facultativement,
pour ajuster, par le système de navigation, des données de capteur reçues en provenance de la tête de capteur à l'aide d'un décalage déterminé à partir des informations de décalage, et facultativement,
pour mettre à jour, par le système de navigation, une grille de repères qui représente l'environnement à l'aide des données de capteur ajustées.

7. Véhicule (200, 300, 400, 500, 600) à navigation autonome selon la revendication 1, et l'un quelconque parmi :
a) dans lequel l'environnement est un entrepôt ; et
b) dans lequel le véhicule robotique est une remorqueuse à navigation autonome et la zone d'opérateur est à l'avant du véhicule.

8. Véhicule (200, 300, 400, 500, 600) à navigation autonome selon la revendication 1, et l'un parmi :
a) dans lequel la zone d'opérateur est dans la première partie ; ou
b) dans lequel la zone d'opérateur est dans la seconde partie ; ou
c) dans lequel la zone d'opérateur est à l'avant de la première partie.

9. Véhicule (200, 300, 400, 500, 600) à navigation autonome selon la revendication 1, dans lequel le véhicule (200, 300, 400, 500, 600) à navigation autonome est configuré pour déterminer, par au moins un détecteur de position (704), un déplacement de la tête de capteur et la fourniture, par le détecteur de position (704), d'informations de décalage indiquant un tel déplacement au système de navigation.

10. Véhicule (200, 300, 400, 500, 600) à navigation autonome selon la revendication 9, configuré pour ajuster, par le système de navigation, des données de capteur reçues de la tête de capteur à l'aide d'un décalage déterminé à partir des informations de décalage.

11. Véhicule selon la revendication 1, et l'un parmi :
a) dans lequel la zone d'opérateur est dans la première partie ; ou
b) dans lequel la zone d'opérateur est dans la seconde partie ; ou
c) dans lequel la zone d'opérateur est à l'avant de la première partie.

12. Véhicule selon la revendication 1, comprenant en outre :
au moins un détecteur de position (704) configuré pour déterminer un déplacement de la tête de capteur et pour fournir des informations de décalage indiquant un tel déplacement au système de navigation.

13. Véhicule selon la revendication 12, dans lequel le système de navigation est configuré pour ajuster des données de capteur reçues de la tête de capteur à l'aide d'un décalage déterminé à partir des informations de décalage.
